Europäisches Patentamt

European Patent Office

Office européen des brevets

(19)

(11) Numéro de publication : **0 128 825**
**B1**

# (12) FASCICULE DE BREVET EUROPÉEN

(45) Date de publication du fascicule du brevet :
04.05.88

(51) Int. Cl.⁴ : **A 01 M 21/04**

(21) Numéro de dépôt : 84401158.5

(22) Date de dépôt : 06.06.84

(54) **Applicateur perfectionné pour herbicides, pesticides ou fongicides.**

(30) Priorité : 07.06.83 FR 8309550
24.10.83 FR 8317213

(43) Date de publication de la demande :
19.12.84 Bulletin 84/51

(45) Mention de la délivrance du brevet :
04.05.88 Bulletin 88/18

(84) Etats contractants désignés :
**BE DE FR GB NL**

(56) Documents cités :
**EP-A- 0 056 012**
**GB-A- 1 508 709**
**GB-A- 2 004 724**
**US-A- 4 320 595**

(73) Titulaire : **Etablissements MATROT**
**F-60152 Noyers-Saint-Martin (FR)**

(72) Inventeur : **Matrot, Louis**
**Noyers Saint Martin**
**F-60480 Froissy (FR)**

(74) Mandataire : **Loyer, Bertrand et al**
**Cabinet Pierre Loyer 77, rue Boissière**
**F-75116 Paris (FR)**

Jouve, 18, rue St-Denis, 75001 Paris, France

### Description

La présente invention a pour objet un applicateur perfectionné pour produits employés dans l'agriculture tels que des herbicides, des pesticides, des fongicides ou autres, cette application étant faite par contact.

Il existe plusieurs méthodes pour appliquer de tels produits : on peut opérer par pulvérisation, par poudrage, par projection des granulés ou encore par contact. Cette dernière méthode consiste à faire traîner sur le sol ou contre des plantes des éléments imbibés de produit : on réalise ainsi une meilleure localisation du produit. On peut ainsi n'appliquer du produit que sur certaines plantes en disposant des mèches verticales distantes les unes des autres, les plantes situées entre les mèches ne recevant pas de produit ; on peut également comme cela est décrit dans le brevet US-A-4.320.595 disposer des éléments imbibés de produit tels que des mousses ou cordes de façon horizontale qui s'étendent en biais ou transversalement par rapport à l'avancement de sorte que seules les plantes qui sont à une hauteur égale ou supérieure à ces éléments reçoivent du produit, celles qui sont plus basses ne recevant pas le produit.

L'invention concerne plus particulièrement cette dernière catégorie d'appareils d'application de produits.

Pour être efficace un appareil applicateur de ce type doit assurer le dépôt d'une quantité suffisante de produit sur la plante avec laquelle il entre en contact, mais sans laisser tomber de gouttes sur la végétation plus basse qui ne doit pas recevoir de produit. Or les dispositifs connus et notamment le brevet US-A-4 320 595 sont généralement constitués de mousses, plaques ou cordes, maintenues imprégnées par capillarité : il s'avère avec ces dispositifs connus que le taux d'imprégnation est mal contrôlé de sorte que ces éléments sont ou bien trop imbibés et il y a apparition de gouttage, ou bien insuffisamment imbibés et le produit est mal appliqué.

Pour pallier cet inconvénient, on a proposé des systèmes de contrôle à pression (ou dépression) d'air ou encore l'emploi d'un tambour rotatif garni de substances absorbantes et imprégnées de liquide de traitement : dans ce dernier cas le contact avec la plante est meilleur, mais le gouttage est difficilement évité.

Le dispositif selon la présente invention est du type comportant au moins une corde qui circule en décrivant une boucle disposée horizontalement, ladite corde étant imprégnée sur une portion de son trajet avec un liquide de traitement, caractérisé par le fait que les deux brins de la corde circulant en sens inverses se croisent au moins une fois dans la zone à traiter et frottent l'un contre l'autre, ce qui améliore régularité de l'imprégnation des deux brins de la corde et en ce que le taux d'imprégnation de ladite corde est réglé par des moyens de régularisation de l'imprégnation, qui éliminent le liquide en excès.

L'utilisation de tels moyens de régularisation permet d'utiliser une corde relativement peu serrée avec une âme intérieure absorbante et une enveloppe extérieure maintenue imbibée par capillarité à partir de l'âme centrale, celle-ci étant peu serrée, les moyens de régularisation par pression et/ou frottement sont, d'autant plus efficaces.

Selon une variante de réalisation, la corde peut passer sur une pluralité de galets de renvoi afin de présenter plus de deux brins au contact des plantes, ces brins étant croisés.

Selon une autre variante de réalisation, on peut disposer une pluralité de cordes, qui étant ainsi plus courtes seront imprégnées plus souvent pour la même vitesse d'imprégnation.

Selon une troisième variante, on peut faire varier la vitesse d'entraînement de la ou des cordes de façon à adapter le dosage du traitement à la densité des plantes à traiter.

D'autres avantages et caractéristiques de l'invention ressortiront de la description suivante et des dessins annexés où :

Figures 1 et 2, représentent schématiquement un dispositif suivant l'invention ;

Figures 3 et 4, des détails du tambour d'entraînement et des moyens de pression ;

Figures 5 et 6, représentent des détails des moyens d'évacuation du surplus ;

Figures 7 et 8, des variantes de mode d'imprégnation ;

Figures 9 et 10, des détails des galets de guidage ;

Figure 11, une vue schématique, en plan, d'un autre mode de réalisation du dispositif de la figure 10 ;

Figure 12, une vue schématique, en plan, d'une troisième variante de réalisation ;

Figures 13 et 14, deux vues illustrant le déplacement axial d'un galet ;

Figures 15 et 16, deux vues illustrant des déflecteurs placés en avant des galets.

Le dispositif perfectionné suivant l'invention comporte essentiellement une corde sans fin 2 entraînée à son passage sur un tambour 1 et guidée, transversalement à l'avancement D, par une série de galets A et B ; sous le tambour 1 est situé un galet de renvoi 3 qui est partiellement immergé, dans la solution contenue dans un bac 4, maintenue de préférence à niveau constant de façon connue ; le tambour 1 est entraîné en rotation par un moteur M.

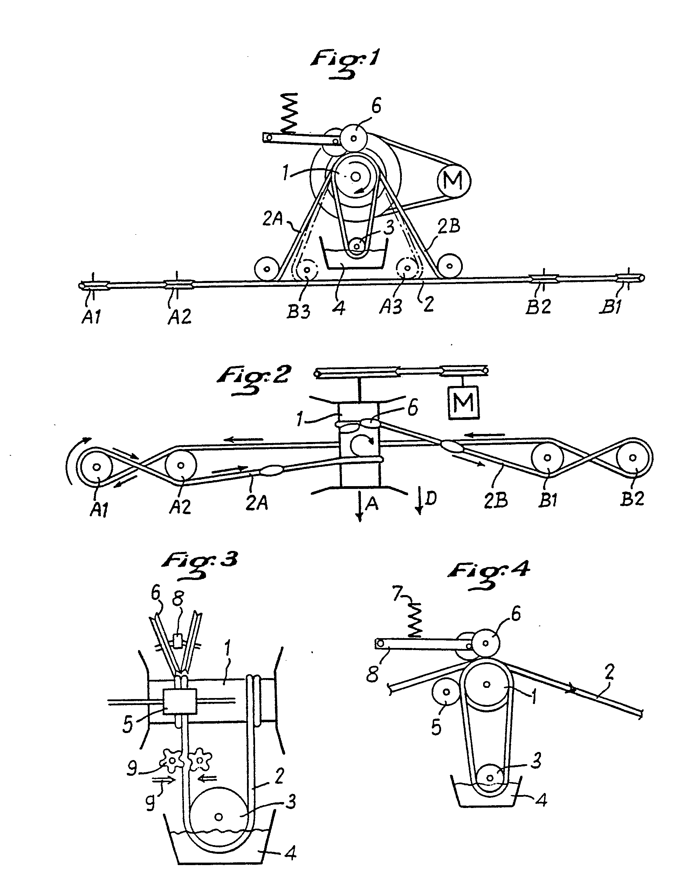

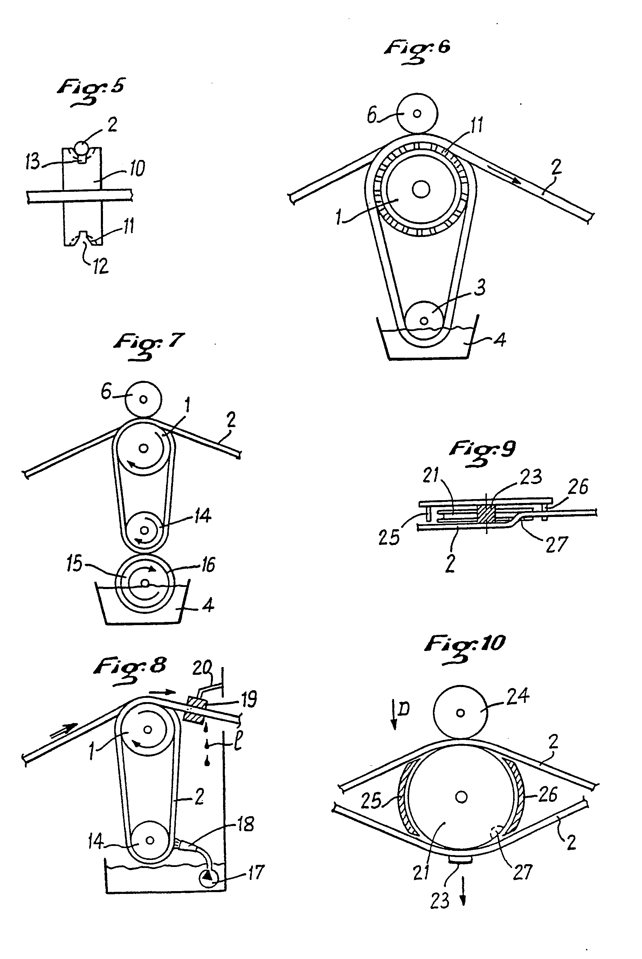

Pour régulariser l'imprégnation de la corde 2, on utilise des galets presseurs, tels 6 (figures 1, 2, 3, 4, 6), qui agissent par compression de la corde contre le tambour 1, montés sur un bras 8, la pression étant assurée par un ressort réglable 7. On peut aussi utiliser un tambour 5 (figures 3, 4) ou bien les galets presseurs peuvent agir deux à deux, comme les galets 9 (figure 3).

Pour améliorer l'efficacité des moyens presseurs, et assurer une bonne évacuation du liquide en excès, l'invention propose avantageusement de disposer une rainure 13 en plus de la gorge 12 qui sert au guidage de la corde 2 et au contre appui des galets 6 ou 9. Cette rainure assure une bonne séparation qui peut être améliorée en disposant des rainures dans un plan axial ou incliné telles 11 (figures 5 et 6) qui, en outre, facilitent l'entraînement de la corde 2 ; avantageusement ces rainures 11 communiquent avec la rainure 13.

Dans le même but, on pourra utiliser des galets ou tambours à dents à la façon d'un engrenage, la corde passant entre les dents des deux éléments pour y être mieux serrée (tel 9, figure 3).

Pour régulariser l'imprégnation de la corde 2 et enlever l'excès de liquide, l'invention propose aussi de disposer autour du brin de la corde 2, après son imprégnation une fourrure 19 enserrant et frottant sur la corde 2, tenue par un support 20 de façon à ce que l'excès retombe suivant 1.

Naturellement les deux modes ci-dessus indiqués peuvent être utilisés simultanément.

On comprend que (figure 2) les brins de la corde guidés par les galets A1 et A2 pour le brin 2A et B1 et B2 pour le brin 2B, se déplacent transversalement à l'avancement et assurent un bon contact, donc un dépôt suffisant de liquide herbicide sur les plantes à traiter.

Pour améliorer l'entraînement, on peut, comme représenté figure 3, faire faire plus d'un tour à la corde 2 sur le tambour 1.

Les deux brins sont croisés (figure 1) ; cette dernière disposition assure un meilleur contact, et par frottement d'un brin sur l'autre augmente la régularité de l'imprégnation des deux brins de la corde.

Au lieu de se faire directement par immersion, comme dans le cas des figures 1, 3, 4, cette imprégnation peut se faire indirectement (figure 7) par un galet intermédiaire 15 avec une garniture absorbante extérieure 16, venant appuyer sur la corde lorsqu'elle passe sur un galet de renvoi 14 ou de même sur le tambour 1.

On peut aussi pour imbiber la corde 2, utiliser une pompe 17 qui par un gicleur 18 pulvérise le liquide sur la corde 2, lorsqu'elle passe sur un galet 14 ou de même sur le tambour 1 (figure 8).

Il est possible soit comme cela est représenté à la figure 8 d'imprégner la corde 2 au moyen d'une pompe 17 et d'un gicleur 18, l'excédent de liquide étant extrait en quelque sorte par essorage, par passage à travers la fourrure 19, soit relier directement la fourrure 19 à la pompe 17 de sorte que cette fourrure réalise l'imprégnation et l'élimination de l'excédent.

Les poulies peuvent être disposées dans des plans horizontaux, comme figure 1, ou verticaux ou inclinés, et même différents de l'un à l'autre.

En variante, au lieu d'utiliser une seule corde 2, on peut en utiliser deux par exemple, pour une plus grande largeur de l'appareil. Dans ce cas, on peut avoir deux dispositifs côte à côte, chacun avec sa corde, son tambour d'entraînement, son système régulateur, ou au contraire certains éléments peuvent être communs, comme par exemple le tambour d'entraînement. Ainsi sur les figures 1 et 2, la corde 2A passe sur les galets A1, A2, A3 et le tambour 1 et le galet 3 et une corde 2B passent sur les galets B1, B2, B3 le tambour 1 et un galet 3.

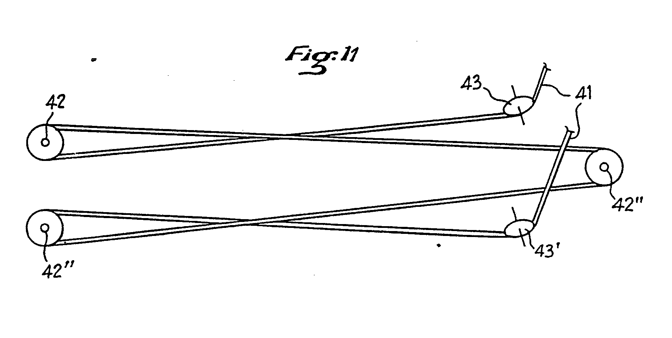

Pour assurer un meilleur guidage de la corde 2 sur les différents galets et éviter que la végétation ne vienne se coincer entre le galet et la corde et ne fasse sortir la corde 2 de la gorge 21 d'un galet, l'invention propose de disposer des guides ou butées en avant et en arrière du galet (figures 9 et 10).

Avantageusement, la butée arrière sera un galet fou 24, l'appui de corde y étant plus fréquent, alors que la butée avant 23 pourra être fixe ne travaillant que plus rarement.

Pour éviter le coincement des plantes empêchant la rotation, on pourra avantageusement disposer à la périphérie du galet et entre les brins avant et arrière des écrans fixes 25-26 (figures 9, 10).

Au cours du travail des particules végétales se déposent sur la corde, tendant à diminuer son efficacité en limitant son imprégnation et réduisant le dépôt sur les plantes, il est donc nécessaire de pouvoir nettoyer la corde.

Pour faciliter son démontage simplement, il est avantageux de prévoir que le tambour 1 et le galet 3 (figure 1) soient montés en porte-à-faux, sur un axe libre d'un côté et sur les galets A-B, on prévoit sur la joue inférieure de la gorge 21, une ouverture 27 (figures 9, 10) dans laquelle peut se loger la corde 2, ce qui permet sans démontage des guides 23, 24 de placer la corde 2 dans la gorge 21.

Sur la figure 11, les brins sont croisés, ce qui évite les balancements et régularise l'imprégnation par frottement des deux brins l'un sur l'autre.

La figure 12 représente schématiquement un appareil comportant deux ensembles d'imprégnation 44 et 45 comme décrit précédemment, comprenant par exemple, bac, tambour, galet inférieur et moyens de régularisation.

Ces moyens d'imprégnation peuvent correspondre à une seule corde, ou comme représenté, à deux cordes distinctes par moyen, ainsi dans le cas de la figure 12, il y a quatre cordes distinctes pour la largeur de travail.

Pour simplifier, les tambours d'entraînement des différentes cordes peuvent être reliés l'un à l'autre et entraînés par un seul moteur.

Suivant un autre perfectionnement, le ou les moteurs d'entraînement peuvent comporter plusieurs vitesses de travail, réglables de préférence depuis le poste de conduite.

Il est apparu intéressant pour garder des caractéristiques de fonctionnement constantes de nettoyer de temps en temps la ou les cordes.

Dans le but de rendre plus aisées les opérations de montage et démontage de la ou des cordes, les tambours d'entraînement, galets de guidage et de renvoi, sont montés sur des axes en porte-à-faux, une face restant libre pour le passage de la corde.

Pour les galets de guidage qui comportent utilement des gardes périphériques 48 (figure 13), il est prévu des moyens simples pour que le galet puisse se déplacer suivant un axe et se dégager des gardes.

A titre d'exemple, le galet 46 est monté sur un axe 47 qui peut coulisser dans le logement du support 48 pour occuper la position représentée à la figure 6.

Le maintien de l'axe en position de travail se fait par un excentrique 49 qui peut tourner autour d'un axe 50 lié à l'axe 47 et qui suivant sa position par rapport au support 48 définit la position haute ou basse du galet 46.

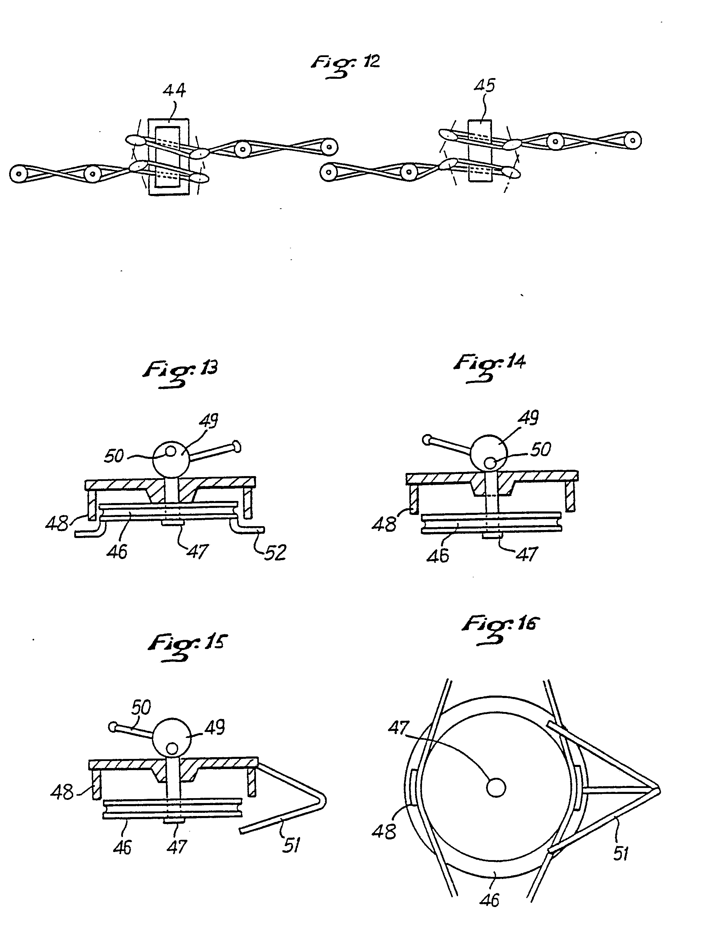

Pour assurer un bon contact avec les cordes des plantes situées devant les galets, il est utile de disposer devant les différents galets 32, 33, 42, 42', 42", des déflecteurs qui déportent latéralement les plantes pour assurer leur bon contact avec la corde. Ainsi le déflecteur 51 (figures 15 et 16) assure que les plantes viendront en contact avec la corde 1 et non avec la face inférieure du galet 46.

Il est aussi possible d'utiliser des doigts déflecteurs, pour dévier les plantes, qui seraient liés au galet 46 tels les doigts 52 (figure 13).

**Revendications**

1. Dispositif pour le traitement chimique par contact des plantes et notamment des plantes plus hautes que la végétation normale du type comportant au moins une corde qui circule en décrivant une boucle disposée horizontalement, ladite corde étant imprégnée sur une portion de son trajet avec un liquide de traitement, caractérisé par le fait que les deux brins de la corde (2, 41) circulant en sens inverses se croisent au moins une fois dans la zone à traiter et frottent l'un contre l'autre, ce qui améliore la régularité de l'imprégnation des deux brins de la corde (2, 41) et en ce que le taux d'imprégnation de ladite corde (2, 41) est réglé par des moyens (5, 6, 9, 13, 16, 19) de régularisation de l'imprégnation, qui éliminent le liquide en excès.

2. Dispositif selon la revendication 1, caractérisé par le fait que le croisement se fait entre deux galets horizontaux (A1, A2 ; B1, B2).

3. Dispositif selon la revendication 2, caractérisé par le fait que la corde s'enroule sur un tambour moteur (1) à axe horizontal et se déplace dans un plan sensiblement vertical avant de s'enrouler autour d'un galet de guidage disposé dans un plan vertical (A3, B3, 43, 43'), d'où elle repart horizontalement vers deux galets horizontaux entre lesquels les deux brins se croisent, le galet vertical et le premier galet horizontal étant proches l'un de l'autre ; des moyens de récupération étant placés aux endroits où des gouttes tombent de la corde.

4. Dispositif selon l'une quelconque des revendications 2 ou 3, caractérisé par le fait qu'il comporte une pluralité de galets horizontaux, les deux brins côte à côte étant croisés à chaque fois entre deux galets horizontaux.

5. Dispositif selon l'une quelconque des revendications 1 à 4, caractérisé par le fait qu'il comporte une corde (2) de chaque côté d'un élément central comportant un tambour d'entraînement (1), les deux galets verticaux (A3, B3) et le tambour étant disposés au-dessus d'un bac de récupération (4).

6. Dispositif selon l'une quelconque des revendications précédentes, caractérisé par le fait que les moyens de régulation de l'imprégnation de la corde (2) sont constitués par au moins un galet presseur (6, 9) dont la surface est lisse (6) ou ondulée (9) s'appuyant sur ladite corde (2) avec une pression réglable (7) soit contre un autre galet presseur, soit contre le tambour d'entraînement (1).

7. Dispositif selon la revendication 6, caractérisé par le fait que la gorge où se trouve logé l'élément souple pendant l'action du ou des galets presseurs (6, 9) est complétée, vers le centre du galet ou du tambour, par au moins une rainure d'évacuation (13) de l'excès de liquide de traitement et/ou une ou plusieurs gorges (11) situées dans des plans inclinés par rapport à l'axe de la corde (2).

8. Dispositif selon l'une quelconque des revendications 1 à 7, caractérisé par le fait que l'imprégnation de la corde (2, 41) se fait par immersion de celle-ci dans un bac (4) rempli du liquide de traitement.

9. Dispositif selon l'une quelconque des revendications 1 à 7, caractérisé par le fait que l'imprégnation de la corde (2, 41) se fait par contact avec un élément intermédiaire (19) lui-même imprégné par immersion et/ou projection.

10. Dispositif selon la revendication 9, caractérisé par le fait que les moyens d'imprégnation (19) et de régulation de l'imprégnation agissent par frottement contre la surface extérieure de la corde (2).

11. Dispositif suivant l'une quelconque des revendications 1 à 10, caractérisé par le fait que certains éléments de guidage et/ou d'entraînement sont montés sur des axes en porte-à-faux (47) pour présenter une face périphérique libre, pour le montage et le démontage de l'élément souple sans fin (2, 41).

12. Dispositif suivant l'une quelconque des revendications 1 à 10, caractérisé par le fait qu'au moins certains galets de guidage qui comportent une garde périphérique (48) sont montés pour pouvoir se déplacer pour que la face périphérique de guidage puisse être dégagée desdites gardes périphériques, et comprenant des moyens de blocage en position de travail tels l'excentrique (49).

13. Dispositif suivant l'une quelconque des revendications 1 à 12, caractérisé par le fait qu'au moins devant certains galets de guidage de la corde, sont disposés des déflecteurs (51) qui écartent latéralement les plantes pour qu'elles viennent en contact avec la corde d'un côté ou l'autre du galet correspondant.

14. Dispositif suivant l'une quelconque des revendications 1 à 13, caractérisé par le fait qu'au moins certains galets de guidage tels (46) comportent des doigts rabatteurs (52) s'étendant radialement en dessous ou sur leur bord latéral pour repousser latéralement les plantes à traiter.

## Claims

1. A device for chemical contact treatment of plants, and particularly of plants taller than normal vegetation, of the type comprising at least one rope which runs while describing a horizontally arranged loop, said rope being impregnated over a portion of its path with a treating liquid, characterized in that both strands (2, 41) of the rope running in opposite directions cross each other at least once within the zone to be treated and rub against each other, thereby improving the evenness of the impregnation of both strands (2, 41) of the rope, and in that the amount of impregnation of said rope is adjusted by means (5, 6, 9, 13, 16, 19) for regulating the evenness of impregnation, as said means eliminate excess liquid.

2. A device according to Claim 1, characterized in that the crossing takes place between two horizontal pulleys (A$_1$, A$_2$ ; B$_1$, B$_2$).

3. A device according to Claim 2, characterized in that the rope winds around a drive drum (1) having an horizontal axis and moves along a substantially vertical plane before winding around a guide pulley arranged in a vertical plane (A$_3$, B$_3$, 43, 43') from which it proceeds horizontally towards two horizontal pulleys between which the two strands cross each other, said vertical pulley and the first horizontal pulley being in close vicinity to each other, liquid recovery means being provided in the locations where liquid drops are dripping from said rope.

4. A device according to Claim 2 or Claim 3, characterized in that it comprises a plurality of horizontal pulleys, the two adjacent strands crossing each other every time between two horizontal pulleys.

5. A device according to any of Claims 1-4, characterized in that it comprises a rope (2) on each side of a central element comprising a drive drum (1), both vertical pulleys (A$_3$, B$_3$) and said drum being arranged above a liquid recovery tub (4).

6. A device according to any of the above Claims, characterized in that the means for regulating impregnation of the rope (2) consist in at least one squeezer roll (6, 9) having a smooth surface (6) or a corrugated surface (9) pressing against said rope (2) with an adjustable pressure (7), either against another squeezer roll, or else against the drive drum (1).

7. A device according to Claim 6, characterized in that the groove in which the flexible element is housed during the action of the squeezer roll or rolls (6, 9) further comprises, in the vicinity of the centre of the pulley or of the drum, at least one draining groove (13) for draining out the surplus of treatment liquid, and/or several grooves (11) located in slanted planes relatively to the axis of the rope (2).

8. A device according to any of Claims 1-7, characterized in that the impregnation of the rope (2, 41) is effected through the immersion thereof in a tub (4) filled with the treatment liquid.

9. A device according to any of Claims 1-7, characterized in that the impregnation of the rope (2, 41) is effected through a contact with an intermediary member (19) which is itself impregnated through immersion and/or spraying.

10. A device according to Claim 9, characterized in that the impregnation means (19) and the means for regulating the impregnation operate by rubbing against the outer surface of the rope (2).

11. A device according to any of Claims 1-10, characterized in that certain guiding and/or driving members are mounted on outboard shafts (47) so as to present a free peripheral face for the mounting and removal of the continuous flexible member (2, 41).

12. A device according to any of Claims 1-10, characterized in that at least some of the guiding pulleys which comprise a peripheral guard (48) are mounted so that they can be displaced for allowing the peripheral guiding face to be disengaged out of said peripheral guards, said device further including means for blocking said pulleys in their operating position, such as the eccentric cam (49).

13. A device according to any of Claims 1-12, characterized in that in front of at least some of the rope guiding pulleys are arranged deflectors (51) which push the plants apart sideways so that they come into contact with the rope on either side of the corresponding pulley.

14. A device according to any of Claims 1-13, characterized in that at least some of the guiding pulleys such as (46) comprise deflector fingers (52) extending radially below or along their lateral edge for pushing aside laterally the plants which are to be treated.

## Patentansprüche

1. Vorrichtung zur chemischen Kontaktbehandlung von Pflanzen, insbesondere von Pflanzen, die hoher als die normale Vegetation sind, mit mindestens einem Seil, das horizontal in einer Schleife umläuft und auf einem Teil seines Weges mit einer Anwendungsflüssigkeit imprägniert wird, dadurch gekennzeichnet, daß die beiden in Gegenrichtung umlaufenden Stränge des Seils (2, 41) sich mindestens einmal in der Anwendungszone kreuzen und aneinander reiben, was die Gleichmäßigkeit der Imprägnierung der beiden Stränge des Seils (2, 41) verbessert, und daß die Stärke der Imprägnierung des Seils (2, 41) durch Einrichtungen (5, 6, 9, 13, 16, 19) zur Regulierung der Imprägnierung gesteuert wird, welche überschüssige Flüssigkeit entfernen.

2. Vorrichtung nach Anspruch 1, dadurch gekennzeichnet, daß die Überkreuzung zwischen zwei horizontalen Rollen (A1, A2 ; B1, B2) stattfindet.

3. Vorrichtung nach Anspruch 2, dadurch gekennzeichnet, daß das Seil um eine Antriebstrommel (1) mit horizontaler Achse gewickelt ist und sich in einer im wesentlichen vertikalen Ebene bewegt, bevor es um eine Führungsrolle läuft, die sich in einer vertikalen Ebene (A3, B3, 43, 43') befindet, von welcher es horizontal zu zwei horizontalen Rollen, zwischen denen sich die beiden Stränge kreuzen, läuft, wobei die vertikale Rolle und die erste horizontale Rolle nahe beieinander liegen und an Stellen, wo Tropfen vom Seil fallen, Auffangeinrichtungen angebracht sind.

4. Vorrichtung nach Anspruch 2 oder 3, dadurch gekennzeichnet, daß sie eine Mehrzahl von horizontalen Rollen enthält, wobei die zwei nebeneinander laufenden Stränge jedesmal zwischen zwei Rollen gekreuzt sind.

5. Vorrichtung nach einem der Ansprüche 1 bis 4, dadurch gekennzeichnet, daß sie ein Seil (2) an jeder Seite eines zentralen Elements aufweist, das eine Antriebstrommel (1) enthält, wobei die beiden vertikalen Rollen (A3, B3) und die Trommel über einem Auffangbehälter (4) angeordnet sind.

6. Vorrichtung nach einem der vorhergehenden Ansprüche, dadurch gekennzeichnet, daß die Einrichtungen zur Regulierung der Imprägnierung des Seils (2) aus mindestens einer Andruckrolle (6, 9) gebildet sind, deren oberfläche glatt (6) oder gewellt (9) ist und auf das Seil mit einem regulierbaren Druck (7) gegen eine andere Andruckrolle oder gegen die Antriebstrommel (1) drückt.

7. Vorrichtung nach Anspruch 6, dadurch gekennzeichnet, daß die Auskehlung, in der sich das geschmeidige Element während der Einwirkung der Andruckrolle oder Andruckrollen (6, 9) befindet, zum Rollen- oder Trommelmittelpunkt hin mit mindestens einer Abflußrinne (13) für die überschüssige Behandlungsflüssigkeit und/oder mit einer oder mehreren Auskehlungen (11), die in Ebenen, welche bezüglich der Achse des Seils (2) geneigt sind, angeordnet sind, versehen sind.

8. Vorrichtung nach einem der Ansprüche 1 bis 7, dadurch gekennzeichnet, daß die Imprägnierung des Seils (2, 41) durch Eintauchen desselben in einen mit der Behandlungsflüssigkeit gefüllten Behälter (4) erfolgt.

9. Vorrichtung nach einem der Ansprüche 1 bis 7, dadurch gekennzeichnet, daß die Imprägnierung des Seils (2, 41) durch Kontakt mit einem Zwischenelement (19) erfolgt, das seinerseits durch Eintauchen oder Bespritzen getränkt wird.

10. Vorrichtung nach Anspruch 9, dadurch gekennzeichnet, daß die Einrichtungen zur Imprägnierung (19) und zur Regelung der Imprägnierung durch Reiben an der äußeren Oberfläche des Seils (2) wirken.

11. Vorrichtung nach einem der Ansprüche 1 bis 10, dadurch gekennzeichnet, daß bestimmte Führungs- und/oder Antriebselemente auf Achsen eines freitragenden Teils (7) so angeordnet sind, daß sie eine freie Umfangsseite für die Montage und die Demontage des biegsamen Endloselements (2, 41) darbieten.

12. Vorrichtung nach einem der Ansprüche 1 bis 10, dadurch gekennzeichnet, daß zumindest bestimmte Führungsrollen, die einen Umfangsschutz (48) aufweisen, beweglich derart angeordnet sind, daß die periphere Führungsfläche vom Umfangsschutz befreit werden kann, und daß Vorrichtungen zur Verriegelung in der Arbeitsstellung, wie Exzenter (49), vorgesehen sind.

13. Vorrichtung nach einem der Ansprüche 1 bis 12, dadurch gekennzeichnet, daß zumindest vor bestimmten Seilführungsrollen Abweiser (51) angeordnet sind, welche die Pflanzen seitlich auseinanderbiegen, so daß sie mit dem Seil auf der einen oder anderen Seite der betreffenden Rolle in Berührung kommen.

14. Vorrichtung nach einem der Ansprüche 1 bis 13, dadurch gekennzeichnet, daß zumindest bestimmte Führungsrollen, wie (46), Umlegefinger (52) aufweisen, die sich radial unterhalb oder über ihren seitlichen Rand erstrecken, um die zu behandelnden Pflanzen seitlich wegzustoßen.

*Fig.1*

*Fig.2*

*Fig.3*

*Fig.4*

Fig. 5

Fig. 6

Fig. 7

Fig. 9

Fig. 8

Fig. 10

## Fig. 11

Fig. 12

Fig. 13

Fig. 14

49
50
48
46   47   52

49
50
48
46   47

Fig. 15

Fig. 16

50
49
48
46   47   51

47
48
46   51